# EUROPEAN PATENT APPLICATION

(11) **EP 3 479 672 A1**
(43) Date of publication of application: **08.05.2019**
(21) Application number: 18203269.8
(22) Date of filing: 30.10.2018
(51) Int. Cl.: A01D 34/416

(54) **CUTTING BLADE HOLDER**

(30) Priority: 01.11.2017 JP 2017211527
(71) Applicant: HONDA MOTOR CO., LTD., Tokyo 107-8556 (JP)
(72) Inventor: YAMAZAKI, Nobuo, Wako-shi, Saitama 351-0193 (JP)
(74) Representative: Weickmann & Weickmann PartmbB

(57) **Abstract**

A cutting blade holder (10) holding a string-shaped cutting blade (14) is provided with a main body portion (30) rotationally driven by a driving source (20), a hook row (L1, L2, L3) having a plurality of hook portions (34) which are each capable of anchoring the cutting blade (14) and which are provided on an outer peripheral surface of the main body portion (30) at intervals in a rotation direction of the main body portion (30), and a guide portion (36) provided rearward of the hook row (L1, L2, L3) in the rotation direction and directing the cutting blade (14) outward in a radial direction of the main body portion (30).

## Description

### BACKGROUND OF THE INVENTION

### Field of the Invention:

The present invention relates to a cutting blade holder holding a string-shaped cutting blade.

### Description of the Related Art:

String trimmers for cutting grass and the like with string-shaped cutting blades such as nylon cords or the like are provided with cutting blade holders holding the cutting blades. For example, U.S. Patent No. 6,363,616 discloses a cutting blade holder configured by stacking a plurality of disc-like resin plates. Each of the resin plates is formed on one end side in the thickness direction with a circumferential groove of a fixed length and on the other end side in the thickness direction with a pair of projections facing each other with a distance therebetween in the circumferential direction. Further, both ends in the extending direction of the circumferential groove are respectively connected to base end sides of the projections through indentations (i.e., notches) extending in the thickness direction of the resin plate.

In this cutting blade holder, the string-shaped cutting blade is inserted at its center portion into the circumferential groove, and both ends of the string-shaped cutting blade are inserted into the indentations to be led to the projections. Then, the both ends of the cutting blade are guided along a space between the projections to be led outward in a radial direction of the cutting blade holder, so that it becomes possible to hold the cutting blade.

### SUMMARY OF THE INVENTION

Occasionally, the string-shaped cutting blade is abraded or broken in the course of cutting works of grass and the like. In the aforementioned cutting blade holder, in order that the length of a portion which extends outside the cutting blade holder to be used while cutting grass and the like (effective length) is kept to a predetermined length necessary for the cutting work, the string-shaped cutting blade, when having become short, is required to be detached for replacement with a new string-shaped cutting blade. The replacement is troublesome and time-consuming.

Therefore, it is a primary object of the present invention to provide a cutting blade holder capable of adjusting the effective length of a string-shaped cutting blade without replacement of the same.

According to one embodiment of the present invention, there is provided a cutting blade holder which holds a string-shaped cutting blade, comprising a main body portion rotationally driven by a driving source, a hook row having a plurality of hook portions each capable of anchoring the cutting blade and provided on an outer peripheral surface of the main body portion at intervals in a rotation direction of the main body portion, and a guide portion provided rearward of the hook row in the rotation direction and directing the cutting blade outward in a radial direction of the main body portion.

In this cutting blade holder, it is possible to hold the cutting blade in a simple configuration in which one end side of the cutting blade is anchored on the hook row provided on the outer peripheral surface of the main body portion and in which the other end side of the cutting blade is led outward in the radial direction of the main body portion (hereafter also referred to simply as outward).

Further, the guide portion is provided rearward of the hook row in the rotation direction of the main body portion, the hook row having the plurality of hook portions provided at intervals in the rotation direction. Accordingly, for example, by choosing a hook portion which, of the hook row, is distanced from the guide portion and by anchoring the cutting blade on the chosen hook portion, it is possible to reduce the ratio of a portion extending outside the main body portion through the guide portion, to the entire length of the cutting blade, that is, the ratio of the length (effective length) of a portion used at a cutting work of grass and the like to the entire length of the cutting blade. Contrary to this, by choosing a hook portion close to the guide portion and by anchoring the cutting blade on the chosen hook portion, it is possible to increase the ratio of the effective length to the entire length of the cutting blade.

In this manner, it is possible to adjust the effective length with a simple configuration of anchoring the cutting blade selectively on one of the plurality of hook portions. At this time, because the plurality of hook portions are provided on the outer peripheral surface of the main body portion, it is possible to provide easy operation for anchoring the cutting blade on the hook portions and for detaching the anchored cutting blade therefrom.

From the above, according to this cutting blade holder, even when, for example, abrasion, breaking or the like caused by cutting grass and the like shortens the cutting blade, it is possible to easily adjust the effective length to a desired dimension by anchoring the cutting blade on a hook portion close to the guide portion instead of replacement of the cutting blade with a new one.

In the aforementioned cutting blade holder, it is preferable that the guide portion have a convex guide surface curved convexly and a concave guide surface facing the convex guide surface and curved concavely and that the convex guide surface and the concave guide surface form a guide aperture which is curved in an arc shape from the outer peripheral surface of the main body portion outward in the radial direction and rearward in the rotation direction.

In this case, in the guide portion leading the cutting blade outside the main body portion, portions with which the cutting blade mainly contacts are the convex guide surface and the concave guide surface, and the portions are each a curved surface. Accordingly, even in the case where the cutting blade is pressed toward the guide portion when the cutting work of grass and the like is performed with the cutting blade being rotated at a high speed together with the main body portion, it is possible to prevent the cutting blade from suffering a large shearing stress.

In the aforementioned cutting blade holder, it is preferable that the convex guide surface and the concave guide surface have the same center of curvature. According to the guide portion formed like this, it becomes possible to lead parallel portions of the cutting blade outside the main body portion in a manner that a load exerted on the cutting blade is further reduced.

In the aforementioned cutting blade holder, it is preferable that the guide portion have a first guide member and a second guide member which is disposed rearward of rearward in the rotation direction and inside in the radial direction relative to the first guide member, that the first guide member and the second guide member form a guide aperture which leads the cutting blade outward in the radial direction, and that the second guide member be provided on a side rearward of the guide aperture in the rotation direction with a curve surface which is convexly curved outward in the radial direction and rearward in the rotation direction.

In this case, the first guide member is disposed outside the second guide member in the radial direction and is disposed in front of the cutting blade in the rotation direction extending outside the main body portion in the manner described above. For this reason, even in the case where the first guide member is brought into contact with an obstacle such as a fence, a railing, a wall, a curbstone or the like while cutting grass and the like, it is possible to protect the cutting blade from being brought into contact with the obstacle and from suffering a load exerted thereon.

Further, the second guide member is provided with the curved surface. Thus, even when the cutting blade comes close to the outer peripheral surface of the main body portion rearward of the first guide member in the rotation direction, the cutting blade is kept away from the outer peripheral surface of the main body portion while being brought into contact with the curved surface of the second guide member. At this time, because the curved surface that the cutting blade is brought into contact with is curved, a large shearing force can be prevented from being exerted on the cutting blade. As a result, it is possible to effectively prevent the cutting blade from being damaged, broken or the like.

In the aforementioned cutting blade holder, it is preferable that the hook row be provided at each of plural stages in the axial direction of the main body portion and that the guide portion be formed in the axial direction with a plurality of insertion portions through which the cutting blade passes. In this case, by the simple configuration, it becomes possible to easily adjust the holding position of the cutting blade in the axial direction of the main body portion, in other words, the cutting height while cutting grass and the like.

In the aforementioned cutting blade holder, it is preferable that the guide portion be provided with a hole portion through which the cutting blade passes, outside the insertion portions in the radial direction. In this case, by passing the cutting blade through the hole portion and the insertion portions, it also become possible to hold the cutting blade directly on the guide portion without using any of the hook portions. Therefore, even in the use of the cutting blade having become short, it is possible to adjust the effective length further effectively.

In the aforementioned cutting blade holder, it is preferable that the guide portion form a leading-out opening for leading the cutting blade outward in the radial direction and has a first opening forming portion and a second opening forming portion which are arranged at an interval in a circumferential direction, and that the first opening forming portion and the second opening forming portion each have a shape which is curved in an arc shape so that an opening width of the leading-out opening becomes larger outward in the radial direction. In this case, the cutting blade can easily pass through the leading-out opening in holding the cutting blade on the cutting blade holder. Further, while cutting grass and the like, it is possible to prevent a large shearing force from being exerted on the cutting blade even when the cutting blade is pressed toward the guide portion while cutting grass or the like.

In the aforementioned cutting blade holder, it is preferable that the main body portion be provided with a protection plate larger in diameter than the main body portion and that the guide portion be disposed inside an outer peripheral edge portion of the protection plate in the radial direction. In this case, the protection plate being larger in diameter than the main body portion is provided, and thus, even when the protection plate is brought into contact with an obstacle while cutting grass and the like, a space corresponding to a difference between outer diameters of the main body portion and the protection plate is formed between the main body portion and the obstacle. Accordingly, it is possible to restrain the cutting blade from being interposed between the main body portion and the obstacle. Further, since the outer peripheral edge portion of the protection plate is disposed outside the guide portion in the radial direction, it is possible to restrain the cutting blade from being interposed between the guide portion and the obstacle while cutting grass and the like. Accordingly, in a simple configuration that the protection plate is provided on one end side in the axial direction of the main body portion, it is possible to suppress the damage, breaking or the like of the cutting blade further effectively.

The above and other objects, features, and advantages of the present invention will become more apparent from the following description when taken in conjunction with the accompanying drawings in which a preferred embodiment of the present invention is shown by way of an illustrative example.

### BRIEF DESCRIPTION OF THE DRAWINGS

FIG. 1 is a side view of a string trimmer provided with a cutting blade holder according to one embodiment of the present invention;
FIG. 2 is a perspective view of the cutting blade holder shown in FIG. 1;
FIG. 3 is a cross-sectional view perpendicular to the axis of a main body portion of the cutting blade holder shown in FIG. 2;
FIG. 4 is a perspective view of the cutting blade holder with a bent portion of a cutting blade anchored on another hook portion differing from that shown in FIG. 2;
FIG. 5 is a cross-sectional view perpendicular to the axis of the main body portion of the cutting blade holder shown in FIG. 4;
FIG. 6 is a perspective view of the cutting blade holder holding the cutting blade by a guide portion;
FIG. 7 is a cross-sectional view showing a relation between the cutting blade held by the cutting blade holder and an obstacle; and
FIG. 8 is a perspective view of a cutting blade holder provided with hook portions according to a modification.

### DESCRIPTION OF THE PREFERRED EMBODIMENT

Hereinafter, a cutting blade holder according to the present invention will be described based on a preferred embodiment with reference to the accompanying drawings. Incidentally, in the following drawings, components which are the same or similar in function and effect will be designated by the same reference numerals and will be omitted from being repetitively described.

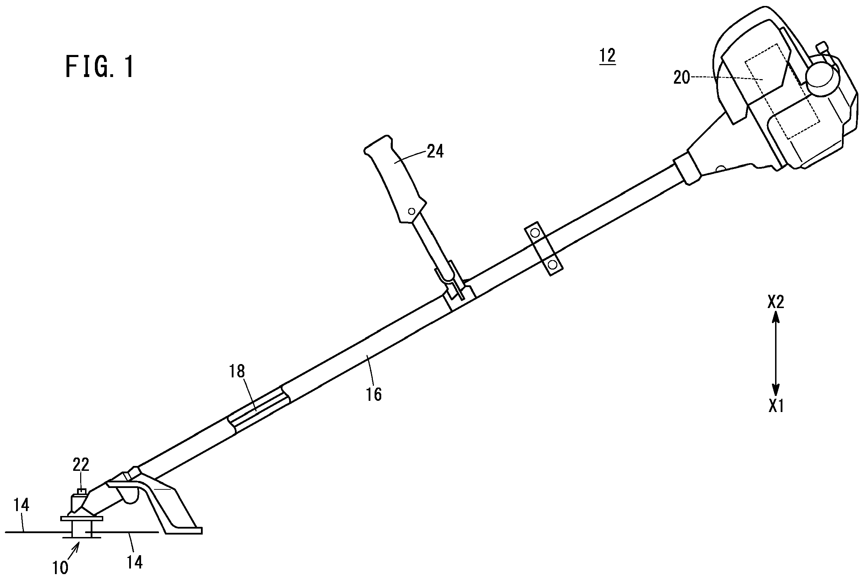

As shown in FIG. 1, in the present embodiment, description will be given regarding an example in which a cutting blade holder 10 is equipped in a string trimmer 12 of a shoulder type. However, without being limited to the string trimmer 12 of the shoulder type, the cutting blade holder 10 is applicable, similarly to the string trimmer 12, to various working machines which are capable of cutting objects (not shown) to be cut such as grass and the like by rotating a string-shaped cutting blade 14.

The string trimmer 12 is mainly equipped with a pipe-like operating rod 16, a drive shaft 18 extending through the operating rod 16, a driving source 20 provided on one end side of the drive shaft 18, a rotational shaft 22 provided on the other end side of the drive shaft 18, a handle 24 provided between one end and the other end of the operating rod 16, and a hanging belt (not shown) provided in the vicinity of the handle 24.

The driving source 20 is constituted by an engine, a motor or the like capable of rotating the drive shaft 18. The rotational driving force of the driving source 20 is transmitted by the drive shaft 18 to the rotational shaft 22, so that the cutting blade holder 10 attached to the rotational shaft 22 can be rotated.

A grass cutter using the string trimmer 12 puts the hanging belt on the shoulder and suspends the string trimmer 12 to make the cutting blade holder 10 face grass and the like. The grass cutter can operate the handle 24 while rotating the cutting blade holder 10 to move the operating rod 16 in all directions while rotating and bringing the string-shaped cutting blades 14 held by the cutting blade holder 10 into contact with grass and the like to cut the same. Incidentally, in the following, respective components of the cutting blade holder 10 will be described on the assumption that the side facing grass and the like during cutting the same is defined as a lower side (the arrow X1 side) while the opposite side is defined as an upper side (the arrow X2 side).

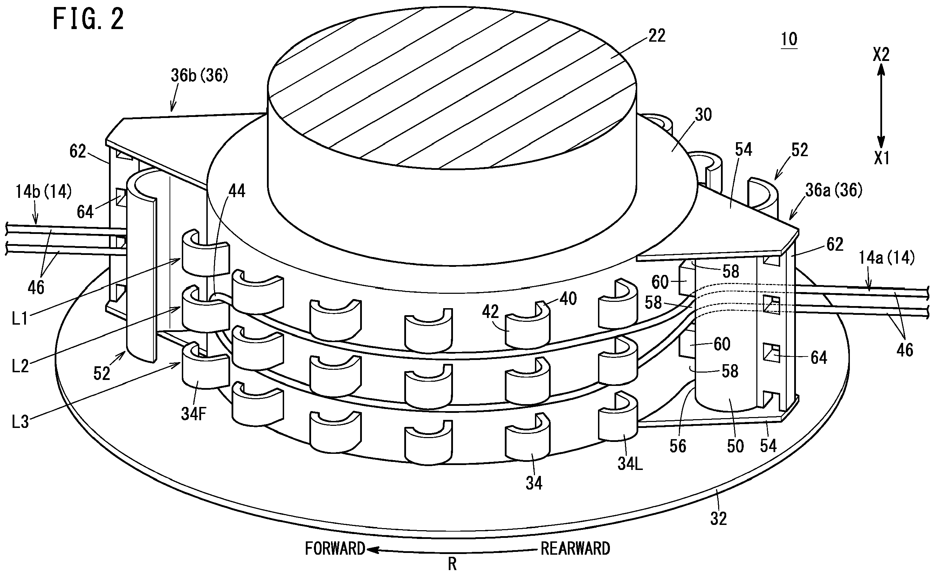

As shown in FIGS. 2 to 5, the cutting blade holder 10 holds the string-shaped cutting blades 14 such as, for example, nylon cords or the like and is mainly provided with a main body portion 30, a protection plate 32, hook rows L1, L2 and L3 each having a plurality of hook portions 34, and guide portions 36. The main body portion 30 is cylindrical and is rotatable in the arrow R direction by being attached to the rotational shaft 22 at one end side (upper end side) in the axial direction. The protection plate 32 is provided at the other end side (lower end side) of the main body portion 30 and takes a disc-like shape being larger in diameter than the main body portion 30.

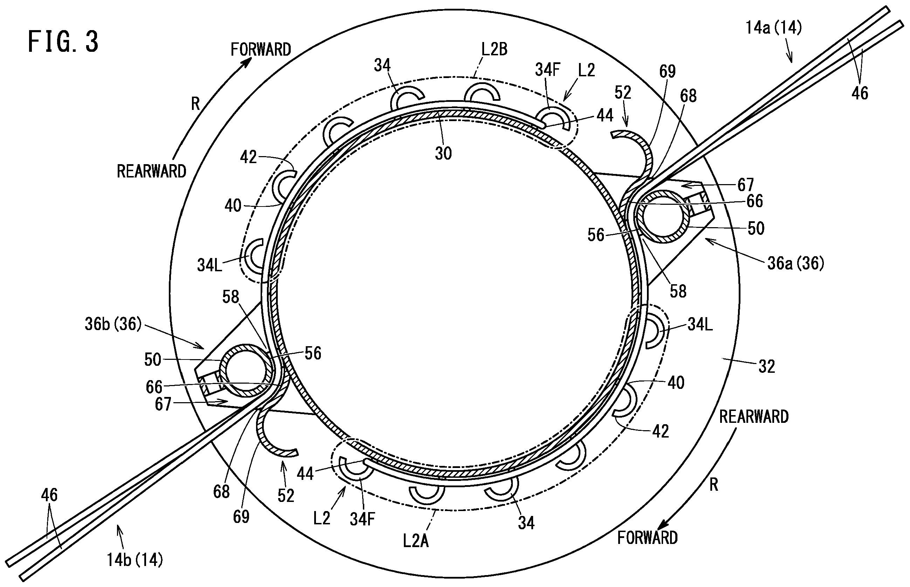

The hook rows L1, L2 and L3 are each composed of a plurality of hook portions 34 which are provided at intervals in the rotation direction of the main body portion 30 (hereafter referred to simply as rotation direction) and are juxtaposed in the vertical direction (the axial direction of the main body portion). In the present embodiment, the hook rows L1, L2 and L3 (refer to FIG. 2) each composed of six hook portions 34 (refer to FIG. 3) making a line in the rotation direction are provided on the outer peripheral surface of the main body portion 30 at three stages in the vertical direction.

Further, as shown in FIG. 3, the hook rows L2 are constituted by a half row L2A arranged on a half side in the rotation direction of the main body portion 30 and another half row L2B arranged on a remaining half side. The same is true with each of the hook rows L1, L3. With this configuration, it is possible for the cutting blade holder 10 to hold two string-shaped cutting blades 14a, 14b. The cutting blades 14a, 14b are also collectively called "cutting blades 14".

The hook portions 34 are each constituted by a base end portion 40 rising from the outer peripheral surface of the main body portion 30 toward the outside in the radial directions of the main body portion 30 (hereafter also referred to simply as radially) and a distal end portion 42 extending from the base end portion 40 forward in the rotation direction. Each hook portion 34 is able to hook or anchor from the side of the distal end portion 42 a bent portion 44 which is formed by bending each cutting blade 14. In each cutting blade 14 forming the bent portion 44 in the manner as described above, both end portions of the bent portion 44 extend mutually parallel to form parallel portions 46

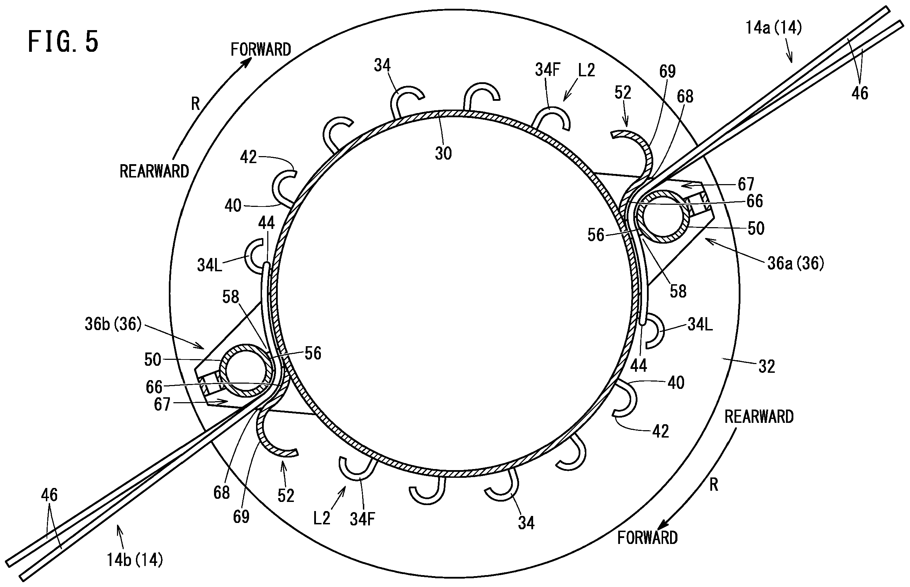

In the present embodiment, as shown in FIGS. 3 and 5, the main body portion 30 is provided with two guide portions 36a, 36b which are arranged on the diametrically opposite sides with the axis of the main body portion 30 placed therebetween. The guide portions 36a, 36b will also be collectively called "guide portions 36". The guide portions 36 are arranged radially inside an outer peripheral edge portion of the protection plate 32.

As shown in FIGS. 2 and 3, the hook portions 34 forming the hook row L2A is arranged forward of the guide portion 36a on one side in the rotation direction. That is, the guide portion 36a is provided rearward of the base end portion 40 of a hook potion 34L which, of the hook portions 34 forming the hook row L2A, is disposed at the rearmost portion in the rotation direction. The guide portion 36b on the other side is similarly disposed relative to the hook portions 34 forming the hook row L2B.

The guide portions 36 each have a first guide member 50 (first opening forming portion) and a second guide member 52 (second opening forming portion). As shown in FIG. 2, the first guide member 50 is secured to the main body portion 30 by attaching plates 54 respectively provided at upper and lower ends of the first guide member 50 and is disposed forward of the second guide member 52 in the rotation direction with a space from the outer peripheral surface of the main body portion 30. Further, the first guide member 50 has a convex guide surface 56 which is curved convexly.

The parallel portions 46 of the cutting blade 14 with the bent portion 44 anchored on the hook portion 34 pass through a space between the outer peripheral surface of the main body portion 30 and the convex guide surface 56. As shown in FIG. 2, between the outer peripheral surface of the main body portion 30 and the convex guide surface 56, partition portions 60 are formed so that insertion portions 58 which enable the parallel portions 46 to pass respectively are formed rearward of the respective hook rows L1, L2, L3 of the hook portions 34 in the rotation direction. That is, the insertion portions 58 are formed respectively between the attaching plate 54 provided on one end side in the axial direction of the main body portion 30 and the partition portion 60, between the adjacent partition portions 60 in the vertical direction, and between the partition portion 60 and the attaching plate 54 provided on the other end side of the main body portion 30 in the axial direction.

Further, a hole forming portion 62 is juxtaposed outside the first guide member 50 in the radial direction and a plurality of hole portions 64 through which the cutting blade 14 is insertable are formed as through holes in the hole forming portion 62. The plurality of hole portions 64 are arranged to be juxtaposed vertically on a radially outer side of the insertion portions 58.

The second guide member 52 is configured by, for example, a leaf spring or the like to be elastically deformable. Further, as shown in FIG. 3, the second guide member 52 has a concave guide surface 66 facing the convex guide surface 56 and curved concavely. These convex guide surface 56 and concave guide surface 66 define a guide aperture 67 which is curved in an arc shape from the outer peripheral surface of the main body portion 30 rearward in the rotation direction and radially outward. The insertion portions 58 are formed on the forward end side of the guide aperture 67 in the rotation direction. A leading-out opening 68 which leads the cutting blade 14 radially outward is formed at a rearward end of the guide aperture 67 in the rotation direction of the guide aperture 67. The first guide member 50 and the second guide member 52 are each curved in an arc shape to widen the opening width of the leading-out opening 68 radially outward.

Further, the second guide member 52 is provided with a curved surface 69 to be continued from the leading-out opening 68 rearward in the rotation direction. The curved surface 69 is convexly curved rearward in the rotation direction and radially outward. It is preferable that the concave guide surface 66 be disposed coaxially with the convex guide surface 56 and that the radius of curvature of the concave guide surface 66 be set larger than that of the convex guide surface 56.

The parallel portions 46 of the cutting blade 14 inserted through the insertion portion 58 go through the guide aperture 67 and are guided toward the radial outside (hereafter referred to simply as outside) of the main body portion 30. Accordingly, when the rotational driving force of the driving source 20 (refer to FIG. 1) is transmitted to rotate the cutting blade holder 10, the parallel portions 46 of the two cutting blades 14 held by the cutting blade holder 10 are rotated by the centrifugal force in the state of extending along the radial direction on both sides in the radial direction of the main body portion 30. In this manner, the cutting blades 14 are rotated and are able to cut grass and the like as cutting objects being in contact with the cutting blades 14. Accordingly, the length of the parallel portions 46 which are led out to the outside of the main body portion 30 through the guide portions 36 corresponds to the length (effective length) of those portions used in cutting operation of the grass and the like.

Further, even in the case that the parallel portions 46 guided outside the main body portion 30 come close to the outer peripheral surface of the main body portion 30 on the side rearward of the first guide member 50 in the rotation direction, the parallel portions 46 are kept away from the outer peripheral surface of the main body portion 30 by being brought into contact with the curved surface 69 of the second guide member 52.

Hereafter, as a method for holding the cutting blade 14 on the cutting blade holder 10, an example will be described in which, as shown in FIGS. 2 and 3, the bent portion 44 of the cutting blade 14a is anchored on the hook portion 34F which is disposed at a forefront portion in the rotation direction of the hook row L2A at a middle stage. Incidentally, since the bent portion 44 of another cutting blade 14b can be anchored on the hook portion 34 of one of the hook rows L2B, L1, L3 in the same manner, description will be omitted regarding the method for holding the cutting blade 14b on the cutting blade holder 10 by anchoring the bent portion 44 on the hook portion 34 of one of the hook rows L2B, L1, L3.

First of all, the cutting blade 14a is curved to form the bent portion 44 and the parallel portions 46. The bent portion 44 of the cutting blade 14a is inserted into the guide aperture 67 from the rear side in the rotation direction and passes through the insertion portion 58 which is disposed at the middle of the three insertion portions 58 juxtaposed in the vertical direction. The insertion portion 58 through which the cutting blade 14a extends may be chosen as the holding position of the cutting blade 14a in the vertical direction of the main body portion 30, in other words, may be chosen at a desirable cutting height of grass and the like.

Then, the cutting blade 14a is drawn forward in the rotation direction through the insertion portion 58 until the bent portion 44 reaches the forefront hook portion 34F of the hook row L2A which is disposed forward of the chosen insertion portion 58 in the rotation direction, and the bent portion 44 is anchored over the distal end portion 42 of the forefront hook portion 34F.

Then, the looseness of the cutting blade 14a between the forefront hook portion 34F and the insertion portion 58 is eliminated by adding a tension rearward in the rotation direction to the cutting blade 14a through the parallel portions 46 disposed rearward of the insertion portion 58 in the rotation direction. Through the foregoing steps, it is possible to hold the cutting blade 14a on the cutting blade holder 10.

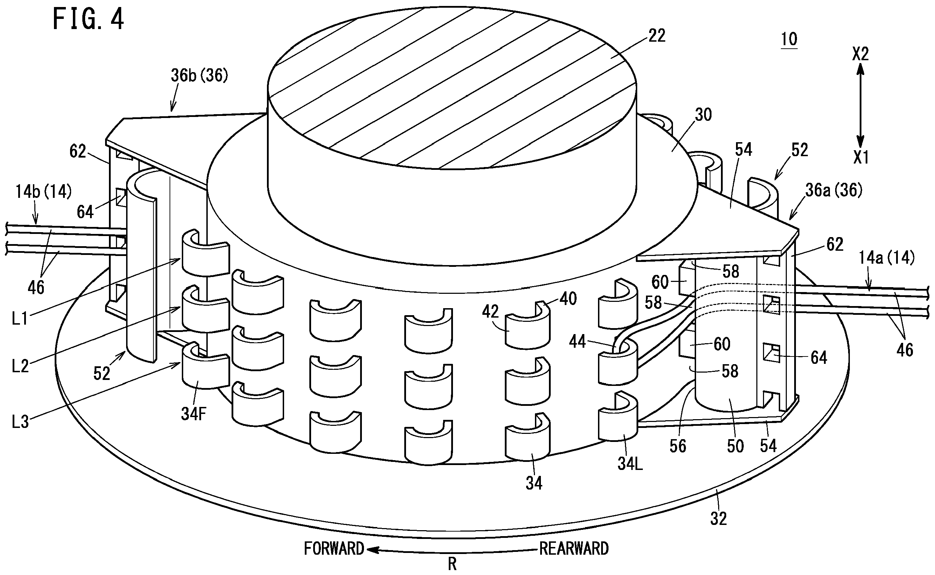

Next, an example will be described in which the bent portion 44 anchored on the hook portion 34F disposed at the forefront portion in the rotation direction of the hook row L2A is detached from the hook portion 34F and is again anchored on the hook portion 34L disposed at the rearmost portion as shown in FIGS. 4 and 5. In this case, a force is applied to the cutting blade 14a so that the bent portion 44 anchored on the forefront hook portion 34F is moved forward of the distal end portion 42 of the forefront hook portion 34F in the rotation direction, and the bent portion 44 is detached from the forefront hook portion 34F.

Then, a rearward tension in the rotation direction is applied to the cutting blade 14a through the parallel portions 46 located rearward of the insertion portion 58 in the rotation direction. After the bent portion 44 is thus moved up to the hook portion 34L at the rearmost portion, the bent portion 44 is anchored on the rearmost hook portion 34L over the distal end portion 42. Thereafter, it is possible to hold the cutting blade 14a on the cutting blade holder 10 in the same manner as the case that the bent portion 44 is anchored on the forefront hook portion 34F. Further, in the same manner, it is possible to anchor the bent portion 44 on any of the hook portions 34 without being limited to the hook portions 34F, 34L disposed at the forefront portion and the rearmost portion and to detach the anchored bent portion 44 therefrom.

As described above, in this cutting blade holder 10, it is possible to hold the cutting blade 14 by a simple configuration in which the bent portion 44 of the cutting blade 14 is anchored on one of the hook portions 34 provided on the outer peripheral surface of the main body portion 30 and in which the parallel portions 46 of the cutting blade 14 are guided outside the main body portion 30 through the guide portion 36.

Further, the guide portion 36 is provided on the rearward side in the rotation direction relative to the hook rows L1, L2, L3 each having the plurality of hook portions 34 which are provided at intervals in the rotation direction of the main body portion 30. Therefore, as shown in FIGS. 2 and 3 for example, by choosing the hook portion 34 which, of the plurality of hook portions 34, is separated a long distance from the guide portion 36 and by anchoring the bent portion 44 on the chosen hook portion 34, it is possible to make small the length ratio of a length of the portion extending outside the main body portion 30 beyond the guide portion 36 to the entire length of the cutting blade 14, that is, the ratio of an effective length.

Contrary to this, as shown in FIGS. 4 and 5 for example, by choosing the hook portion 34 being in a short distance from the guide portion 36 and by anchoring the bent portion 44 of the cutting blade 14 on the chosen hook portion 34, it is possible to make long the effective length to the entire length of the cutting blade 14.

In this manner, in a simple configuration in which the bent portion 44 is anchored on any one chosen from the plurality of hook portions 34, it is possible to adjust the dimension of the effective length. At this time, because the plurality of hook portions 34 are provided on the outer peripheral surface of the main body portion 30 easily accessible from outside the cutting blade holder 10, it is possible to easily anchor and detach the bent portion 44 with respect to the hook portions 34.

Accordingly, in this cutting blade holder 10, even in the case where the cutting blade 14 has become short due to abrasion, breaking or the like, it is possible to easily adjust the effective length of the cutting blade 14 to a desired dimension by changing the anchored position of the bent portion 44 to the hook portion 34 closer to the guide portion 36 instead of replacement with a new cutting blade 14.

In this cutting blade holder 10, because the guide portion 36 is configured as described above, those portions with which the parallel portions 46 of the cutting blade 14 are mainly brought into contact are the convex guide surface 56 and the concave guide surface 66 each forming a curved surface. Accordingly, in the case where the cutting blade 14 rotated at a high speed together with the main body portion 30 to cut grass and the like, the cutting blade 14, even when pressed toward the guide portion 36, can be prevented from suffering a large shearing stress.

Further, the first guide member 50 is disposed on a radially outside the second guide member 52 and is disposed forward in the rotation direction of the parallel portions 46 which are led outside the main body portion 30 as described above. Thus, for example, even in the case where the first guide member 50 is brought into contact with an obstacle such as a fence, a railing, a wall, a curbstone or the like while cutting grass and the like, the cutting blade 14 is prevented from being brought into contact with the obstacle and from suffering a load exerted thereon, so that it is possible to protect the cutting blade 14.

Furthermore, the second guide member 52 is provided with the curved surface 69. Therefore, when the parallel portions 46 come close to the outer peripheral surface of the main body portion 30 on the rearward side of the first guide member 50 in the rotation direction, the parallel portions 46 are brought into contact with the curved surface, and thus, the parallel portions 46 can be prevented from suffering a large shearing stress. As a result, it is possible to effectively prevent the cutting blade 14 from being damaged, broken or the like.

In this cutting blade holder 10, the hook rows L1, L2, L3 are provided at the plural stages in the axial direction on the main body portion 30 as described above, and the insertion portions 58 are formed at the plural stages in the axial direction. Therefore, in a simple configuration like this, it becomes possible to easily adjust the holding position of the cutting blade 14 in the axial direction of the main body portion 30, in other words, the cutting height of grass and the like.

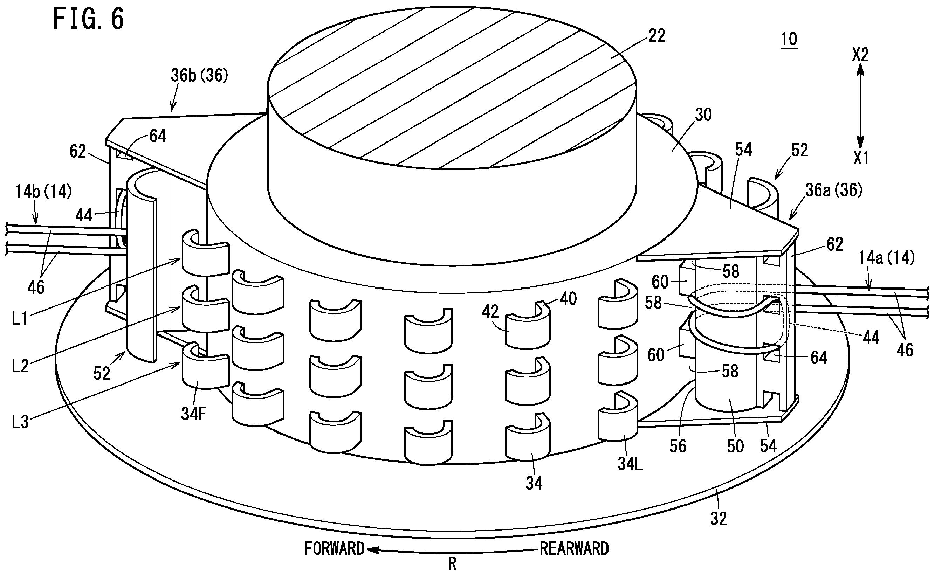

In this cutting blade holder 10, the hole portions 64 are provided outside the insertion portions 58 in the radial direction. In this case, as shown in FIG. 6, by passing the cutting blade 14 through the hole portions 64 and the insertion portion 58, it becomes possible to hold the cutting blade 14 directly on the guide portion 36 without using any hook portion 34.

In the case where the cutting blade 14 is held by the guide portion 36, for example, one end side of the cutting blade 14 is inserted from the rear side in the rotation direction into one of the two hole portions 64 provided near the insertion portion 58 through which the cutting blade 14 is to pass, while the other end side of the cutting blade 14 is inserted into the other hole portion 64 from the rear side in the rotation direction. The both end sides of the cutting blade 14 having passed through the hole portions 64 in this way are inserted into the guide aperture 67 through the insertion portion 58 from the front side in the rotation direction.

In this manner, the cutting blade 14 is held by the guide portion 36 with a portion between the hole portions 64 of the hole forming portion 62 positioned inside the bent portion 44 of the cutting blade 14, and the parallel portions 46 of the cutting blade 14 are led outside the main body portion 30 through the guide portion 36. Therefore, it becomes possible to adjust the effective length of the cutting blade 14 by effectively using the cutting blade 14 having become short.

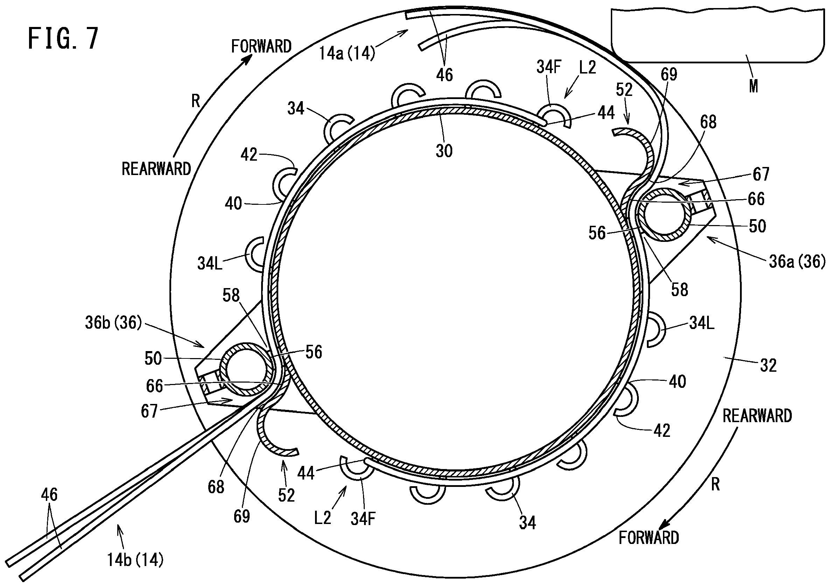

In this cutting blade holder 10, the main body portion 30 is provided on one end side in the axial direction with the protection plate 32 being larger in diameter than the main body portion 30. Thus, for example, even in the case where an obstacle M exists while cutting grass and the like as shown in FIG.7, the protection plate 32 is brought into contact with the obstacle M, so that it is possible to keep a space formed by the difference in diameters of the protection plate 32 and the main body portion 30 from the obstacle M and the main body portion 30. This makes it possible to obviate that the cutting blade 14 is interposed between the obstacle M and the main body portion 30.

Further, since the outer peripheral edge portion of the protection plate 32 is placed outside the guide portion 36 in the radial direction, it is possible to prevent the cutting blade 14 from being interposed between the obstacle M and the guide portion 36 while cutting grass and the like. Accordingly, by the simple configuration that the protection plate 32 is provided on the main body portion 30 on one end side in the axial direction, it becomes possible to prevent the damage, breaking or the like of the cutting blade 14 further effectively.

In this cutting blade holder 10, since the arrangements and shapes of the concave guide surface 66 and the convex guide surface 56 are set as mentioned above, it becomes possible to lead the parallel portions 46 outside the main body portion 30 while further reducing the load on the cutting blade 14.

The present invention is not limited to the foregoing embodiment and may be variously modified without departing from the gist of the present invention.

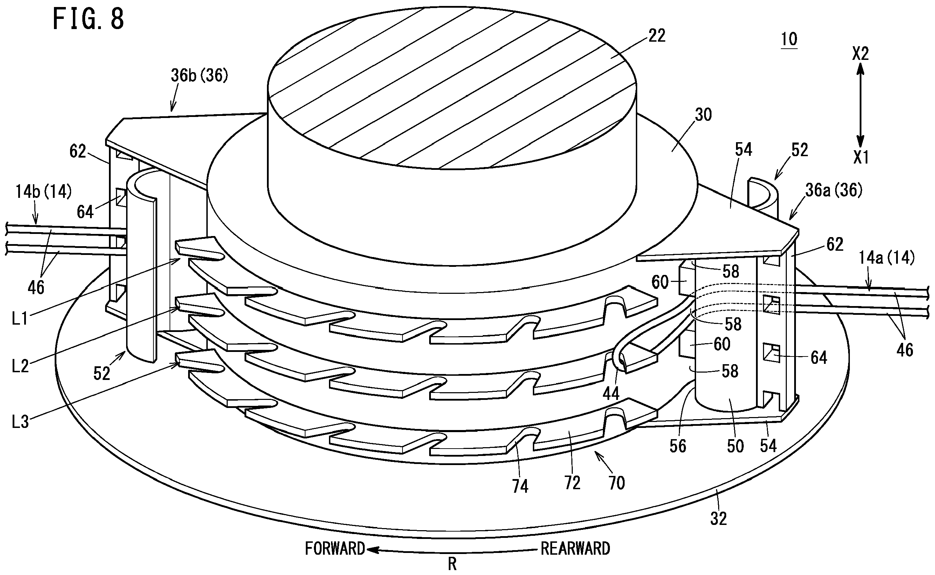

For example, although in the cutting blade holder 10 according to the foregoing embodiment, the hook portions 34 are each composed of the base end portion 40 and the distal end portion 42, the hook portions 34 are not particularly limited to this configuration if configured to be able to anchor the bent portion 44 of the cutting blade 14. For example, the cutting blade holder 10 may be provided with hook portions 70 shown in FIG. 8 in place of the aforementioned hook portions 34.

The hook portions 70 are configured by being provided with a plurality of notches 74 on each of protruding pieces 72 which respectively protrude radially outward from the outer peripheral surface of the main body portion 30. The plurality of notches 74 are each slanted from the forward side toward the rearward side in the rotation direction as they are engraved from the outside toward the center side in the radial direction of the main body portion 30. The hook portions 70 are each able to anchor the cutting blade 14 with the bent portion 44 of the cutting blade 14 fitted in any of the notches 74.

In the cutting blade holder 10 according to the foregoing embodiment, two cutting blades 14a, 14b in total are held by one hook portion 34 of the hook row L2A and one hook portion 34 of the hook row L2B. However, the present invention is not particularly limited to this configuration. The cutting blade holder 10 may be configured to hold one cutting blade 14 or may be configured to hold three or more cutting blades 14. In this case, the combination between the hook rows L1, L2, L3 and the guide portion 36 provided rearward in the rotation direction may be provided by the same number as the cutting blades 14 to be held by the cutting blade holder 10.

Further, the number and arrangements of the hook portions 34 are also not limited to the foregoing embodiment and may be variously set depending on the specification of the string trimmer (working machine) provided with the cutting blade holder 10, the specification of the cutting blades 14, and the like.

Although the guide portion 36 in the foregoing embodiment is configured to have the first guide member 50 and the elastically deformable second guide member 52, the present invention is not limited to this configuration. The guide portion 36 suffices to be a configuration in which the parallel portions 46 of the cutting blade 14 having the bent portion 44 anchored on the hook portion 34 can be guided outside the main body portion 30. The number of the insertion portions 58 is not limited to three. There may be used one insertion portion or multiple numbers or insertion portions other than three. The cutting blade holder 10 may not provided with the hole forming portion 62 nor with the protection plate 32.

A cutting blade holder (10) holding a string-shaped cutting blade (14) is provided with a main body portion (30) rotationally driven by a driving source (20), a hook row (L1, L2, L3) having a plurality of hook portions (34) which are each capable of anchoring the cutting blade (14) and which are provided on an outer peripheral surface of the main body portion (30) at intervals in a rotation direction of the main body portion (30), and a guide portion (36) provided rearward of the hook row (L1, L2, L3) in the rotation direction and directing the cutting blade (14) outward in a radial direction of the main body portion (30).

## Claims

1. A cutting blade holder (10) holding a string-shaped cutting blade (14), the holder (10) comprising:
a main body portion (30) rotationally driven by a driving source (20);
a hook row (L1, L2, L3) having a plurality of hook portions (34) each capable of anchoring the cutting blade (14) and provided on an outer peripheral surface of the main body portion (30) at intervals in a rotation direction of the main body portion (30); and
a guide portion (36) provided rearward of the hook row (L1, L2, L3) in the rotation direction and directing the cutting blade (14) outward in a radial direction of the main body portion (30).

2. The cutting blade holder (10) according to claim 1, wherein:
the guide portion (36) has a convex guide surface (56) curved convexly and a concave guide surface (66) facing the convex guide surface (56) and curved concavely; and
the convex guide surface (56) and the concave guide surface (66) form a guide aperture (67) which is curved in an arc shape from the outer peripheral surface of the main body portion (30) outward in the radial direction and rearward in the rotation direction.

3. The cutting blade holder (10) according to claim 2, wherein:
the convex guide surface (56) and the concave guide surface (66) have a same center of curvature.

4. The cutting blade holder (10) according to claim 1, wherein:
the guide portion (36) has a first guide member (50) and a second guide member (52) which is disposed rearward in the rotation direction and inward in the radial direction relative to the first guide member (50);
the first guide member (50) and the second guide member (52) form a guide aperture (67) which leads the cutting blade (14) outward in the radial direction; and
the second guide member (52) is provided on a side rearward of the guide aperture (67) in the rotation direction with a curve surface (69) which is convexly curved outward in the radial direction and rearward in the rotation direction.

5. The cutting blade holder (10) according to any one of claims 1 to 4, wherein:
the hook row (L1, L2, L3) is provided at each of plural stages in the axial direction of the main body portion (30); and
the guide portion (36) is formed in the axial direction with a plurality of insertion portions (58) through which the cutting blade (14) is insertable.

6. The cutting blade holder (10) according to claim 5, wherein:
the guide portion (36) is provided with a hole portion (64) through which the cutting blade (14) passes, outside the insertion portions (58) in the radial direction.

7. The cutting blade holder (10) according to any one of claims 1 to 6, wherein:
the guide portion (36) forms a leading-out opening (68) for leading the cutting blade (14) outward in the radial direction and has a first opening forming portion (50) and a second opening forming portion (52) which are arranged at an interval in a circumferential direction; and
the first opening forming portion (50) and the second opening forming portion (52) each have a shape which is curved in an arc shape so that an opening width of the leading-out opening (68) becomes larger outward in the radial direction.

8. The cutting blade holder (10) according to any one of claims 1 to 7, wherein:
the main body portion (30) is provided with a protection plate (32) larger in diameter than the main body portion (30); and
the guide portion (36) is disposed inward of an outer peripheral edge portion of the protection plate (32) in the radial direction.
